# EUROPEAN PATENT APPLICATION

(11) **EP 3 037 257 A1**
(43) Date of publication of application: **29.06.2016**
(21) Application number: 15200605.2
(22) Date of filing: 16.12.2015
(51) Int. Cl.: B32B 5/06, B32B 5/10, B32B 5/12, B32B 3/06

(54) **IMPROVEMENTS IN OR RELATING TO LAMINATES**

(30) Priority: 24.12.2014 EP 14200313
(71) Applicant: Hexcel Holding GmbH, 4061 Pasching (AT)
(72) Inventor: MOSER, Hannes, 4061 Pasching (AT); WIELÄNDER, Stephanie, 4061 Pasching (AT)
(74) Representative: Pols, Ronald Maarten

(57) **Abstract**

A multi-axial fibrous reinforcement material comprising at least one first layer comprising uni-directional fibre tows in a substantially 0 degree direction and at least one further layer comprising uni-directional fibre tows in a direction in a range substantially deviating from 0 degrees and from 90 degrees. The material further comprises a means for securing the layers in relation to one another, the securing means forming a venting structure to provide gas venting in a direction across the respective layers.

## Description

The present invention relates to a fibre reinforcement materials and a moulding material comprising such a fibre reinforcement material.

Conventionally, fibrous material employed in composite materials may be tows or woven or non-woven fabrics and will be chosen according to the final use and desired properties of the composite structure. This invention is particularly concerned with systems in which the reinforcing fibre consists of multiaxial fibrous reinforcement layers which contain multiple layers of multifilament tows which are arranged substantially parallel tows and each tow comprises a multitude of individual substantially parallel filaments. Examples of fibrous materials that may be used include glass fibre, carbon fibre and Aramid.
Moulding materials comprising mixtures of fibrous material and thermosetting resins are sometimes known as prepregs and can be prepared by impregnating the fibrous material with the resin in liquid form. Some resins are liquid at ambient temperature and impregnation can therefore be achieved at ambient temperature. However, usually it is preferred to heat the resin to reduce its viscosity to aid impregnation. Other resins are semi-solid or solid at ambient temperature and are melted to enable impregnation of the fibrous material with a liquid resin.

The impregnation of the fibrous material may be achieved by depositing the resin on a backing layer for example, by passing the backing layer through a bath of the liquid resin and coating the resin on the backing layer by means of a doctor blade. The surface of the backing layer carrying the resin may then be brought into contact with the fibrous material and be pressed into the fibrous layer to achieve impregnation of the fibrous layer with the resin. Alternatively a moving film of resin may be brought into contact with a moving backing layer and then brought into contact with a fibrous layer in a pair of heated nip rollers. In most previous applications it is preferred to employ two layers of resin one on each side of the fibrous layer to produce a sandwich structure to which pressure is applied to cause the resin to flow into the fibrous layer to fully impregnate the layer to form a conventional prepreg, so that the layer largely contains fibers which are fully embedded in resin and no air remains in the layer. These prepregs have a resin content in the prepreg ranging from 25 to 45% by weight of the prepreg. In highly stressed components the void content of laminates formed from prepreg moulding materials is significant for the performance, as each void is a potential point of defect which decreases the mechanical properties. For this reason, customers of prepregs require prepregs which produce low, reproducible void content, but which at the same time have good handling properties.

Air can be trapped during the manufacture of the prepreg moulding material and during the lay up in the mould of multiple prepreg layers in a multilayer stack which forms the moulding.

Air also tends to be captured between layers of prepregs due to their tacky surfaces. It has been customary to process the lay-up of prepregs under vacuum (usually in a vacuum bag or autoclave) to remove air from laminate stacks. Generally, it has not been possible to completely remove trapped interlaminar air and intralaminar air (air within a single layer of prepreg) from conventional prepregs and to manufacture laminates which have uniform properties across the length and breadth of the laminate,

The present invention aims to obviate or at least mitigate the above described problems and/or to provide improvements generally.

According the invention there is provided a reinforcement material and a moulding material as defined in any one of the accompanying claims.

In a first embodiment of the invention there is provided a multi-axial fibrous reinforcement material comprising at least one first layer comprising uni-directional fibre tows in a substantially 0 degree direction and at least one further layer comprising uni-directional fibre tows in a direction in a range substantially deviating from 0 degrees up to +/-90 degrees, wherein the material further comprises a means for securing the layers in relation to one another, the securing means forming a venting structure to provide gas venting in a direction across the respective layers.

In one aspect the fibrous reinforcement material may be used in a resin transfer moulding (RTM) process. In another aspect of the invention, the fibrous reinforcement material may be impregnated with a resin to a desired degree and may form a moulding material or prepreg.

The first and further layer may be impregnated with resin before the securing means are applied.

The tows in the further layer may be arranged at angles ranging from 5 to 170 degrees, 10 to 160 degrees, 20 to 170 degrees, 30 to 150 degrees, 45 to 135 degrees, 80 to 100 degrees, 90 degrees, and/or combinations of the aforesaid values and ranges.

In another embodiment there is provided a moulding material comprising at least one fibrous reinforcement ply comprising the multi-axial reinforcement material wherein the moulding material comprises a resin matrix, said resin matrix comprising a weight in the range of from 32 to 48% by weight in relation to the moulding material.

In a further embodiment there is provided a method of manufacturing a composite article from the multi-axial reinforcement material and a use of the material to improve the resin content of a cured composite part by reducing its void content to less than 4%, preferably less than 3%, and more preferably less than 2%.

The stitch style and density is critical to the performance and handling of the fabric. The stitch pattern (chain, tricot, modified tricot, etc.), the frequency (courses per inch in the roll direction or 0° axis), and gauge (rows of stitching across the roll width) all impact the behaviour of the reinforcement material. The stitching secures the orientation of the tows and also secures the layers in relation to one another. The stitching may also space the tows in relation to one another and/or provide gas venting paths.

In a preferred embodiment there is provided a multi-axial fibrous reinforcement material comprising one first layer comprising uni-directional fibre tows in a substantially 0 degree direction and two layers each having uni-directional fibre tows in a +45 and -45 direction respectively, the tows in each layer having a weight in the range of from 200 to 800 g/m², preferably from 300 to 610 g/m², wherein the material further comprises securing means in the form of a PES or polyester thread having a weight in the range of from 50 to 80 dtex, preferably from 70 to 80 dtex or from 160 to 170 dtex and the securing means are applied in a tricot stitch having a density of at least 2 stitches per cm², preferably 3,or 4,or 5,or 6,or 7 or 8 stitches per cm². By selecting this density, we have found that the tows are spaced in relation to one another by the stitching. When this material is impregnated with a resin, the stitching and/or spaced tows allow the venting of entrapped air and other gases during curing. This results in a cured prepreg lay-up with a reduced void content (reduced to values ranging from 0.1 to 3% of void content as opposed to a cured prepreg layup manufactured from individual unidirectional layers without stitching which is in the range of from 4 to 6% when impregnated with the same resin and cured under the same conditions).

The present invention is concerned with a moulding material or structure which can be moulded to produce laminates with a reduced number of voids. Additionally the invention is concerned with a process in which a liquid curable resin is applied to a layer of fibrous material to provide a moulding material in a manner whereby the presence of voids in the final moulded product produced from the material is reduced. The invention is particularly useful in applications where a final laminate is obtained from a stack of a plurality of layers comprising fibre and thermosetting resins such as a stack containing at least 20 such layers. The invention is directed to minimising the presence of voids due to air entrapped within the prepregs and also to air entrapped between the stacked prepregs.

In an embodiment, there is provided a moulding material or structure comprising a layer of fibrous reinforcement and a curable liquid resin wherein the fibrous reinforcement comprises a plurality of tows each tow comprising a plurality of filaments wherein resin is provided at least partially between interstices between tows of the fibrous reinforcement to provide an air venting path in at least the interior of the tows. The interior of the tows is at least partially resin free to provide an air venting path to allow air to be removed during processing of the material or structure.

In another aspect of the invention, the moulding material or structure comprises tows of fibrous reinforcement material which provide the air venting paths. The tows are structural of reinforcement fibers so in effect, they serve multiple purposes: on the one hand they provide air venting paths, and on the other hand, they provide structural reinforcement. This has the important advantage that no material is added to or included in the moulding material to solely provide the air venting function.

Resin and fibre content of uncured moulding materials or structures are determined in accordance with ISO 11667 (method A) for moulding materials or structures which contain fibrous material which does not comprise unidirectional carbon. Resin and fibre content of uncured moulding materials or structures which contain unidirectional carbon fibrous material are determined in accordance with DIN EN 2559 A (code A). Resin and fibre content of cured moulding materials or structures which contain carbon fibrous material are determined in accordance with DIN EN 2564 A.

The fibre and resin volume% of a prepreg moulding material or structure can be determined from the weight% of fibre and resin by dividing the weight% by the respective density of the resin and carbon fiber.

The % of impregnation of a tow or fibrous material which is impregnated with resin is measured by means of a water pick up test.

The water pick up test is conducted as follows. Six strips of prepreg are cut of size 100 (+/-2) mm x 100 (+/-2) mm. Any backing sheet material is removed. The samples are weighed near the nearest 0.001 g (W1). The strips are located between PTFE backed aluminium plates so that 15 mm of the prepreg strip protrudes from the assembly of PTFE backed plates on one end and whereby the fiber orientation of the prepreg is extends along the protruding part. A clamp is placed on the opposite end, and 5 mm of the protruding part is immersed in water having a temperature of 23 °C, relative air humidity of 50% +/- 35%, and at an ambient temperature of 23 °C. After 5 minutes of immersion the sample is removed from the water and any exterior water is removed with blotting paper. The sample is then weighed again W2. The percentage of water uptake WPU(%) is then calculated by averaging the measured weights for the six samples as follows: WPU(%)=[(<W2>-<W1>)/<W1>)x100. The WPU(%) is indicative of the Degree of Resin Impregnation (DRI).

Typically, the values for the resin content by weight for the uncured prepreg of the invention are in the ranges of from 15 to 70% by weight of the prepreg, from 18 to 68% by weight of the prepreg, from 20 to 65 % by weight of the prepreg, from 25 to 60% by weight of the prepreg, from 25 to 55% by weight of the prepreg, from 25 to 50% by weight of the prepreg, from 25 to 45% by weight of the prepreg, from 25 to 40% by weight of the prepreg, from 25 to 35% by weight of the prepreg, from 25 to 30% by weight of the prepreg, from 30 to 55% by weight of the prepreg, from 35 to 50% by weight of the prepreg and/or combinations of the aforesaid ranges.

Water pick up values for the uncured prepreg moulding material and tows of the invention may be in the range of from 1 to 90%, 5 to 85%, 10 to 80%, 15 to 75%, 15 to 70%, 15 to 60%, 15 to 50%, 15 to 40%, 15 to 35%, 15 to 30%, 20 to 30%, 25 to 30% and/or combinations of the aforesaid ranges. In a further embodiment the invention provides a process wherein a layer of unidirectional fibrous tows which are fully impregnated with liquid resin is superimposed on a layer of dry unimpregnated unidirectional fibrous tows and the structure consolidated so that the resin penetrates the spaces between the unimpregnated tows but leaves the spaces between the filaments within the tows at least partially unimpregnated. A supporting web or scrim may be provided on one or both sides of the structure preferably before consolidation.

The term prepreg or semipreg is used herein to describe a moulding material or structure in which the fibrous material has been impregnated with the liquid resin to the desired degree and the liquid resin is substantially uncured.

The prepregs of this invention may be produced from normally available epoxy resins which may contain a hardener and optionally an accelerator. In a preferred embodiment the epoxy resin is free of a traditional hardener such as dicyandiamide and in particular we have found that these desirable prepregs can be obtained by use of a urea based or urea derived curing agent in the absence of a hardener such as dicyandiamide. The relative amount of the curing agent and the epoxy resin that should be used will depend upon the reactivity of the resin and the nature and quantity of the fibrous reinforcement in the prepreg. Typically from 0.5 to 10 wt % of the urea based or urea derived curing agent based on the weight of epoxy resin is used.

The laminates produced from the prepregs of this invention can contain less than 3 % by volume of voids, or less than 1 % by volume of voids, typically less than 0.5 % by volume and particularly less than 0.1 % by volume based on the total volume of the laminate as measured by microscopic analysis of 20 spaced cross sections measuring 30 x 40 mm in cross section (spacing 5 cm) of a cured sample of the laminate. The cross section is polished and analysed under a microscope over a viewing angle of 4.5 to 3.5 mm to determine the surface area of the voids in relation to the total surface area of each cross section of the sample and these measurements are averaged for the number of cross sections. This method for determining the void fraction is used within the context of this application, although alternative, standardized methods are available such as DIN EN 2564. These methods are however expected to provide comparative results in relation to the microscopic analysis as outlined here. Also, the maximum size of the voids is assessed in each viewing angle section and this number is averaged over the 20 samples. The average surface area of the voids is taken as the value of the void content by volume. We have found that void fractions or levels s as low as no more than 0.01% by volume are achieved.

The prepregs of this invention are typically used at a different location from where they are manufactured and they therefore require handleability. It is therefore preferred that they are dry or as dry as possible and have low surface tack. It is therefore preferred to use high viscosity liquid curable resins. The invention has the additional added benefit that the prepregs of the invention have improved storage stability when compared with fully impregnated prepregs.

The prepreg is preferably provided with one or more backing sheets to facilitate handling of the material and/or rolling up of the material. The backing sheet may comprise a polyolefin based material such as polyethylene, polypropylene and/or copolymers thereof. The backing sheet may comprise embossing. This has the advantage of providing the prepreg with an air venting surface structure. The air venting surface structure comprising embossed channels which allow air to escape during processing. This is particularly useful as this prevents interply entrapment as interply air is effectively removed via the air venting surface channels.

The prepregs of this invention are intended to be laid-up with other composite materials (e.g. other prepregs which may also be according to this invention or they may be other prepregs) to produce a curable laminate or a prepreg stack. The prepreg is typically produced as a roll of prepreg and in view of the tacky nature of such materials, a backing sheet is generally provided to enable the roll to be unfurled at the point of use. Thus, preferably the prepreg according to the invention comprises a backing sheet on an external face.

The prepregs of this invention are produced by impregnating the fibrous material with the epoxy resin. The viscosity of the resin and the conditions employed for impregnation are selected to enable the desired degree of impregnation. It is preferred that during impregnation the resin has a viscosity of from 0.1 Pa.s to 100 Pa.s, preferably from 6 to 100 Pa.s, more preferably fromy 18 to 80 Pa.s and even more preferably from 20 to 50 Pa.s. In order to increase the rate of impregnation, the process may be carried out at an elevated temperature so that the viscosity of the resin in reduced. However it must not be so hot for a sufficient length of time that premature curing of the resin occurs. Thus, the impregnation process is preferably carried out at temperatures in the range of from 40°C to 110°C more preferably 60°C to 80°C. It is preferred that the resin content of the prepregs is such that after curing the structure contains from 30 to 40 wt %, preferably 31 to 37 wt % more preferably 32 to 35 wt % of the resin. The relative amount of resin and multifilament tow, the impregnation line speed the viscosity of the resin and the density of the multifilament tows should be correlated to achieve the desired degree of impregnation between the tows and to leave spaces between the individual filaments within the tows which are unoccupied by the resin.

The resin can be spread onto the external surface of a roller and coated onto a paper or other backing material to produce a layer of curable resin. The resin composition can then be brought into contact with the multifilament tows for impregnation perhaps by the passage through rollers. The resin may be present on one or two sheets of backing material, which are brought into contact with one or both sides of the tows and consolidated such as by passing them through heated consolidation rollers to cause the desired degree of impregnation. Alternatively, the resin may be applied via a resin bath by conducting the tows through the resin (direct fibre impregnation). The resin may also comprise a solvent which is evaporated following impregnation of the fibre tows.

In the impregnation processes the resin can be maintained in liquid form in a resin bath either being a resin that is liquid at ambient temperature or being molten if it is a resin that is solid or semi-solid at ambient temperature. The liquid resin can then be applied to a backing employing a doctor blade to produce a resin film on a release layer such as paper or polyethylene film. The fibre tows may then be placed into the resin and optionally a second resin layer may be provided on top of the fibre tows and then consolidated.

A backing sheet can be applied either before or after impregnation of the resin. However, it is typically applied before or during impregnation as it can provide a non-stick surface upon which to apply the pressure required for causing the resin to impregnate the fibrous layer.

The epoxy resin used in the preparation of the prepreg preferably has an Epoxy Equivalent Weight (EEW) in the range from 150 to 1500 preferably a high reactivity such as an EEW in the range of from 200 to 500 and the resin composition comprises the resin and an accelerator or curing agent. Suitable epoxy resins may comprise blends of two or more epoxy resins selected from monofunctional, difunctional, trifunctional and/or tetrafunctional epoxy resins.

Suitable difunctional epoxy resins, by way of example, include those based on: diglycidyl ether of bisphenol F, diglycidyl ether of bisphenol A (optionally brominated), phenol and cresol epoxy novolacs, glycidyl ethers of phenol-aldelyde adducts, glycidyl ethers of aliphatic diols, diglycidyl ether, diethylene glycol diglycidyl ether, aromatic epoxy resins, aliphatic polyglycidyl ethers, epoxidised olefins, brominated resins, aromatic glycidyl amines, heterocyclic glycidyl imidines and amides, glycidyl ethers, fluorinated epoxy resins, glycidyl esters or any combination thereof.

Difunctional epoxy resins may be selected from diglycidyl ether of bisphenol F, diglycidyl ether of bisphenol A, diglycidyl dihydroxy naphthalene, or any combination thereof.

Suitable trifunctional epoxy resins, by way of example, may include those based upon phenol and cresol epoxy novolacs, glycidyl ethers of phenol-aldehyde adducts, aromatic epoxy resins, aliphatic triglycidyl ethers, dialiphatic triglycidyl ethers, aliphatic polyglycidyl amines, heterocyclic glycidyl imidines and amides, glycidyl ethers, fluorinated epoxy resins, or any combination thereof. Suitable trifunctional epoxy resins are available from Huntsman Advanced Materials (Monthey, Switzerland) under the tradenames MY0500 and MY0510 (triglycidyl para-aminophenol) and MY0600 and MY0610 (triglycidyl meta-aminophenol).

Triglycidyl meta-aminophenol is also available from Sumitomo Chemical Co. (Osaka, Japan) under the tradename ELM-120.

Suitable tetrafunctional epoxy resins include N,N, N',N'-tetraglycidyl-m-xylenediamine (available commercially from Mitsubishi Gas Chemical Company under the name Tetrad-X, and as Erisys GA-240 from CVC Chemicals), and N,N,N',N'-tetraglycidylmethylenedianiline (e.g. MY0720 and MY0721 from Huntsman Advanced Materials). Other suitable multifunctional epoxy resins include DEN438 (from Dow Chemicals, Midland, MI) DEN439 (from Dow Chemicals), Araldite ECN 1273 (from Huntsman Advanced Materials), and Araldite ECN 1299 (from Huntsman Advanced Materials).

The epoxy resin composition preferably also comprises one or more urea based curing agents and it is preferred to use from 0.5 to 10 wt % based on the weight of the epoxy resin of a curing agent, more preferably 1 to 8 wt %, more preferably 2 to 8 wt %. Preferred urea based materials are the range of materials available under the commercial name Urone®. In addition to a curing agent, a suitable accelerator such as a latent amine-based curing agent, such as dicyanopolyamide (DICY).

Accordingly, the present invention provides a prepreg moulding material for manufacturing a fibre-reinforced composite material, the prepreg comprising a layer of fibrous reinforcement fully impregnated by a matrix resin material, wherein the resin material has a storage modulus G' of from 3 x 10⁵ Pa to 1 x 10⁸ Pa and a loss modulus G" of from 2 x 10⁶ Pa to 1 x 10⁸ Pa.

Preferably, the resin material has a storage modulus G' of from 1 x 10⁶ Pa to 1 x 10⁷ Pa, more preferably from 2 x 10⁶ Pa to 4 x 10⁶ Pa.

Preferably, the resin material has a loss modulus G" of from 5 x 10⁶ Pa to 1 x 10⁷ Pa, more preferably from 7 x 10⁶ Pa to 9 x 10⁶ Pa.

Preferably, the resin material has a complex viscosity of from 5 x 10⁵ Pa to 1 x 10⁷ Pa.s, more preferably from 7.5 x 10⁵ Pa to 5 x 10⁶ Pa.s.

Preferably, the resin material has a complex viscosity of from 1 x 10⁶ Pa to 2 x 10⁶ Pa.s.
more preferably from 5 to 30 Pa.s at 80 °C. Preferably, the resin material has a viscosity of from 10 to 25 Pa.s at 80 °C. Preferably, the resin material is an epoxy resin.

We have discovered that the aforesaid storage modulus and loss modulus properties allow the air venting structure to remain in place during handling, storage and lay up of the prepreg moulding material or structure up to the start of processing when the laminate stack is heated up to temperatures over 40 °C and a vacuum pressure is applied, even if multiple plies (stacks of 20, 30, 40, 60 or even more plies) are laid up.

The behaviour of thermosetting pre-preg materials is highly viscoelastic at the typical lay-up temperatures used. The elastic solid portion stores deformation energy as recoverable elastic potential, whereas a viscous liquid flows irreversibly under the action of external forces.

This complex viscosity is obtained using a rheometer to apply an oscillation experiment. From this the complex modulus G* is derived as the comlex oscillation which is applied to the material is known (Principles of Polymerization, John Wiley & Sons, New York, 1981).

In viscoelastic materials the stress and strain will be out of phase by an angle delta. The individual contributions making the complex viscosity are defined as G' (Storage Modulus) = G* x cos (delta); G" (Loss Modulus) = G* x sin(delta). This relationship is shown in Figure 8 of WO 2009/118536.

G* is the complex modulus. G' relates to how elastic the material is and defines its stiffness. G" relates to how viscous a material is and defines the damping, and liquid non recoverable flow response of the material.

For a purely elastic solid (glassy or rubbery), G" =0 and the phase angle detla is 0°, and for a purely viscous liquid, G'=0 and the phase angle delta is 90° .

The loss modulus G" indicates the irreversible flow behaviour and a material with a high loss modulus G" is also desirable to prevent the early creep-like flow and maintain an open air path for longer. Therefore the resin used in the prepregs of the present invention has a high storage modulus and a high loss modulus, and correspondingly a high complex modulus, at a temperature corresponding to a typical lay-up temperature, such as room temperature (20 °C).

The resin material preferably has a phase angle delta such that the value of delta increases by at least 25 °C over a temperature range of from 10 to 25 °C. Optionally, the value of the phase angle delta increases by a value of from 25 to 70 °C over a temperature range of from 10 to 25 °C. Optionally, the value of the phase angle delta between the complex modulus G* and the storage modulus G' increases by a value of from 35 to 65 °C over a temperature range of from 10 to 25 °C. Optionally, the value of the phase angle delta is no more than 70 ° and/or at least 50 degrees at at least a value of within the temperature range of from 12.5 to 25 °C.

In this specification, the viscoelastic properties, i.e. the storage modulus, loss modulus and complex viscosity, of the resin used in the prepregs of the present invention were* measured at application temperature (i.e. a lay-up temperature of 20 C) by using a TA Instruments AR2000 rheometer with disposable 25mm diameter aluminium plates. The measurements were carried out with the following settings: an oscillation test at decreasing temperature reducing from 40 °C down to -10 °C at 2 °C/mm with a controlled displacement of 1 x 10⁻⁴ rads at a frequency of 1 Hz and a gap of 1000 micrometer.

Typically, the stiffness of the viscoelastic prepreg is characterised by the resin exhibiting a high elastic rheological response. The resin rheology is characterised by a storage modulus G' of the resin, preferably between 3 x 10⁵ Pa and 1 x 10 ⁸ Pa at 20 °C, more preferably from 1 x 10⁶ Pa to 1 x 10⁷ Pa, yet more preferably from 2 x 10⁶ Pa to 4 x 10⁶ Pa. The higher the storage modulus at room temperature, the greater the air transport properties of the prepreg stack. However, the upper limit of the storage modulus is limited because otherwise the pre-preg would become too rigid and would develop a tendency to snap as the prepreg is being laminated even onto the gentle curvature typical in a wind turbine spar.

In the manufacture of a structural member in the form of a spar or beam using the prepreg moulding material or structure of the present invention, preferably the resin has a high loss modulus G" between 2 x 10⁶ Pa and 1 x 10⁸ Pa at 20 °C, more preferably from 5 x 10⁶ Pa to 1 x 10⁷ Pa, yet more preferably from 7 x 10⁶ Pa to 9 x 10⁶ Pa.

The resin material preferably has a high complex viscosity at 20 °C of from 5 x 10⁵ Pa to 1 x 10⁷ Pa.s, more preferably from 7.5 x 10⁵ Pa to 5 x 10⁶ Pa.s, yet more preferably from 1 x 10⁶ Pa to 2 x 10⁶ Pa.s.

Furthermore, as stated above the viscosity of the resin in the moulding material is relatively high. This provides that prior to the curing stage, which is typically carried out an elevated temperature, for example at a temperature greater than 75 °C, a typical curing temperature being 80 °C or higher, the resin exhibits low or even negligible flow properties. The resin material preferably has a viscosity of from 5 to 30 Pa.s at 80 °C, more preferably from 10 to 25 Pa.s at 80 °C. V In this specification, the resin flow viscosity during the cure cycle was measured using a TA Instruments AR2000 rheometer with disposable 25mm diameter aluminium plates. The measurement was carried out with the following settings: increasing temperature from 30 to 130 °C 2 °C/mm with a shear stress of 3.259Pa, gap: 1000 micrometer.

The term interstices as used in this application to define the space or volume which is present between adjacent tows. This space or volume may comprise filaments of one or more adjacent tows. The space or volume may be filled when the fibrous material is impregnated, either partly or completely.

The multifilament tows used in this invention may comprise cracked (i.e. stretch-broken), selectively discontinuous or continuous filaments. The filaments may be made from a wide variety of materials, such as carbon, basaltic fibre, graphite, glass, metalized polymers, aramid and mixtures thereof. Glass and carbon fibres tows are preferred carbon fibre tows, being preferred for wind turbine shells of length above 40 metres such as from 50 to 60 metres. The structural fibres are individual tows made up of a multiplicity of unidirectional individual fibres. Typically the fibres will have a circular or almost circular cross-section with a diameter for carbon in the range of from 3 to 20 µm, preferably from 5 to 12 µm. For other fibres, including glass, the diameter may be in the range of from 3 to 600 µm, preferably from 10 to 100 µm. Different tows may be used in different prepregs according to the invention and different prepregs may be used together to produce a cured laminate according to the properties required of the cured laminate.

Preferably, the first layer is located on an outer surface of multi-axial fibrous reinforcement material. This layer is takes up any tension from rolling and unrolling of material and prevents any other layers from being deformed.

The reinforcing fibers may be synthetic or natural fibers or any other form of material or combination of materials that, combined with the resin composition of the invention, forms a composite product. The reinforcement web can either be provided via spools of fiber that are unwound or from a roll of textile. Exemplary fibers include glass, carbon, graphite, boron, ceramic and aramid. Preferred fibers are carbon and glass fibers. Hybrid or mixed fiber systems may also be envisaged. The use of cracked (i.e. stretch-broken) or selectively discontinuous fibers may be advantageous to facilitate lay-up of the product according to the invention and improve its capability of being shaped. Although a unidirectional fiber alignment is preferable, other forms may also be used. Typical textile forms include simple textile fabrics, knit fabrics, twill fabrics and satin weaves. It is also possible to envisage using non-woven or non-crimped fiber layers. The surface mass of fibers within the fibrous reinforcement is generally 80-4000 g/m², preferably 100-2500 g/m², and especially preferably 150-2000 g/m². The number of carbon filaments per tow can vary from 3000 to 320,000, again preferably from 6,000 to 160,000 and most preferably from 12,000 to 48,000. For fiberglass reinforcements, fibers of 600-2400 tex are particularly adapted.

Exemplary layers of unidirectional fibrous tows are made from HexTow® carbon fibres, which are available from Hexcel Corporation. Suitable HexTow® carbon fibres for use in making unidirectional fibre tows include: IM7 carbon fibres, which are available as tows that contain 6,000 or 12,000 filaments and weight 0.223 g/m and 0.446 g/m respectively; IM8-IM10 carbon fibres, which are available as tows that contain 12,000 filaments and weigh from 0.446 g/m to 0.324 g/m; and AS7 carbon fibres, which are available in tows that contain 12,000 filaments and weigh 0.800 g/m, tows containing up to 80,000 or 50,000 (50K) filaments may be used such as those containing about 25,000 filaments available from Toray and those containing about 50,000 filaments available from Zoltek. The tows typically have a width of from 3 to 7 mm and are fed for impregnation on equipment employing combs to hold the tows and keep them parallel and unidirectional.

The tows of the prepregs will be impregnated with the epoxy resin so that the resin is present between the tows but does not fill the spaces between the individual filaments within the tows although some resin may pass into those spaces during impregnation. The impregnation may be controlled so that a first side of the layer of tows is wetted by the resin whereas the second side remains dry. Alternatively both sides can be wetted by resin providing the resin does not fill all the spaces between the individual filaments within the tows. The prepregs of the present invention are predominantly composed of resin and the multifilament tows.

A stack of prepregs for preparing cured laminates may contain more than 40 prepreg layers, typically more than 60 layers and at times more than 80 layers, some or all of which may be prepregs according to the present invention. One or more of the prepreg layers in the stack may be cured or precured to part process the resin in the prepreg layer. It is however preferred that all the prepregs are according to the invention. Typically the stack will have a thickness of from 1 cm. to 10 cm, preferably from 2 cm to 8 cm, more preferably from 3 to 6 cm.

Epoxy resins can become brittle upon curing and toughening materials can be included with the resin to impart durability although they may result in an undesirable increase in the viscosity of the resin. Alternatively as described in copending Application No. EP11195218.0 the toughening material may be supplied as a separate layer such as a veil.

Where the additional toughening material is a polymer it should be insoluble in the matrix epoxy resin at room temperature and at the elevated temperatures at which the resin is cured. Depending upon the melting point of the thermoplastic polymer, it may melt or soften to varying degrees during curing of the resin at elevated temperatures and re-solidify as the cured laminate is cooled. Suitable thermoplastics should not dissolve in the resin, and include thermoplastics, such as polyamides (PAS), polyethersulfone (PES) and polyetherimide (PEI). Polyamides such as nylon 6 (PA6) and nylon 12 (PA12) and mixtures thereof are preferred.

Once prepared the prepreg may be rolled-up, so that it can be stored for a period of time. It can then be unrolled and cut as desired and optionally laid up with other prepregs to form a prepreg stack in a mould or in a vacuum bag which is subsequently placed in a mould and cured.

Once prepared, the prepreg or prepreg stack is cured by exposure to an elevated temperature, and optionally elevated pressure, to produce a cured laminate. As discussed above, the prepregs of the present invention can provide excellent mechanical properties without requiring the high pressures encountered in an autoclave process.

Thus, in further aspect, the invention relates to a process of curing the thermosetting resin within a prepreg or prepreg stack as described herein, the process involving exposing the prepreg or prepreg stack to a temperature sufficient to induce curing of the thermosetting resin composition and is preferably carried out at a pressure of less than 3.0 bar absolute.

The curing process may be carried out at a pressure of less than 2.0 bar absolute, preferably less than 1 bar absolute. In a particularly preferred embodiment the pressure is less than atmospheric pressure. The curing process may be carried out at one or more temperatures in the range of from 80 to 200°C, for a time sufficient to cure of the thermosetting resin composition to the desired degree.

Curing at a pressure close to atmospheric pressure can be achieved by the so-called vacuum bag technique. This involves placing the prepreg or prepreg stack in an air-tight bag and creating a vacuum on the inside of the bag. This has the effect that the prepreg stack experiences a consolidation pressure of up to atmospheric pressure, depending on the degree of vacuum applied.

Once cured, the prepreg or prepreg stack becomes a composite laminate, suitable for use in a structural application, for example in an aerospace structure or a wind turbine blade.

Such composite laminates can comprise structural fibres at a level of from 45% to 75% by volume (fiber volume fraction), preferably from 55 % to 70 % by volume, more preferably from 58 % to 65 % by volume (DIN EN 2564 A).

In a preferred embodiment, there is provided a multi-axial fibrous reinforcement material comprising one first layer comprising uni-directional fibre tows in a substantially 0 degree direction and two layers each having uni-directional fibre tows in a +45 and -45 direction respectively, wherein the material further comprises securing means in the form of a PES or polyester thread of weight 76, 78 or 167 dtex. The first layer has a weight of about 570 g/m² and the further layers each have a weight of about 300 g/m². The securing means are applied in a tricot stitch having a density of at least 2 stitches per centimetre, preferably 3,or 4,or 5,or 6,or 7 or 8 stitches per centimetre.

The unique properties of the lightweight layers such as woven and non woven fibrous layers, and other similar structured thermoplastic polymer layers, used in this invention make it possible to cure the laminates using such layers in an out-of-autoclave process. This relatively low pressure and low cost curing process can be used because the damage tolerance (e.g. Compression After Impact - CAI) of the cured laminate is not substantially less than the damage tolerance achieved using the higher pressure and higher expense of an autoclave. In contrast, out-of-autoclave curing of laminates that have interleaf zones toughened with insoluble thermoplastic particles produces cured laminates that have damage tolerances that are significantly reduced.

The invention has applicability in the production of a wide variety of materials. One particular use is in the production of wind turbine blades and spars. Typical wind turbine blades comprise two long shells which come together to form the outer surface of the blade and a supporting spar within the blade and which extends at least partially along the length of the blade. The shells and the spar may be produced by curing the prepregs or stacks of prepregs of the present invention.

The length and shape of the shells vary but the trend is to use longer blades (requiring longer shells) which in turn can require thicker shells and a special sequence of prepregs within the stack to be cured. This imposes special requirements on the materials from which they are prepared. Prepregs based on unidirectional multifilament carbon fibre tows are preferred for blades of length 30 metres or more particularly those of length 40 metres or more such as 45 to 65 metres. The length and shape of the shells may also lead to the use of different prepregs within the stack from which the shells are produced and may also lead to the use of different prepregs along the length of the shell. In view of their size and complexity the preferred process for the manufacture of wind energy components such as shells and spars is to provide the appropriate prepregs within a vacuum bag, which is placed in a mould and heated to the curing temperature. The bag may be evacuated before or after it is placed within the mould.

The reduction in the number of voids in the laminates is particularly useful in providing shells and/or spars and/or spar caps for wind turbine blades having uniform mechanical properties. Particularly spars and parts thereof are subjected to high loads. Any reduction in void content greatly improves the mechanical performance of these parts. This in turn allows the parts to be built at a reduced weight (for example by reducing the number of prepreg layers) in comparison to a similar part which would have a higher void content. Furthermore, in order to withstand the conditions to which wind turbine structures are subjected during use it is desirable that the cured prepregs from which the shells and spars are made have a high Tg and preferably a Tg greater than 90°C.

The invention will now be illustrated by reference to the accompanying drawings in which:

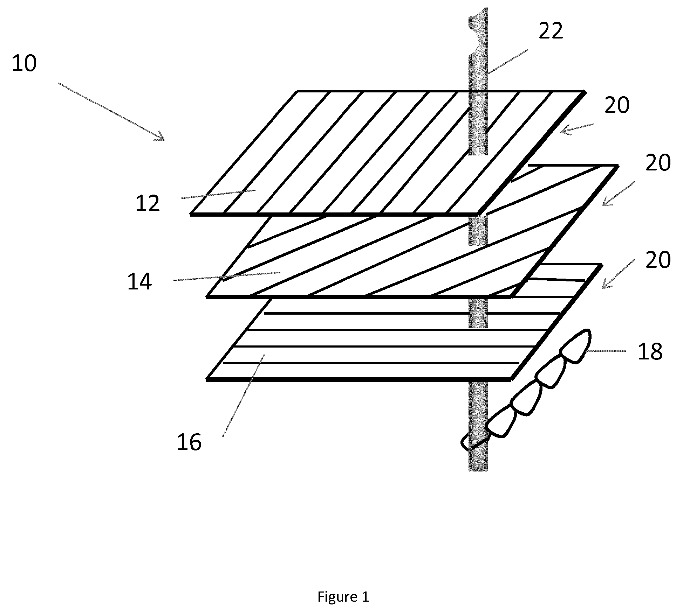

Figure 1 is a schematic illustration of the material according to an embodiment of the invention.

This Figure shows a multi-axial fibrous reinforcement material 10 comprising at least one first layer 12 comprising uni-directional fibre tows 20 in a substantially 0 degree direction and second layer 14 and a third layer 16 each comprising uni-directional fibre tows 20 in a direction in a range substantially deviating from 0 degrees and from 90 degrees. In the Figure, in layer 14 the tows 20 are arranged in a 45 degree direction, whereas the tows in layer 16 are in a 90 degree direction (perpendicular to the direction of the tows in layer 12). The material further comprises securing means in the form of stitching forming a venting structure to provide gas venting in a direction across the respective layers. The stitching retains the orientation of the tows and also secures the layers 12, 14,16 in relation to one another.

Each of the layers 12, 14, 16 has an areal weight of 400 g/m² and they comprise E-glass tows.

The stitching is applied across the plies 12,14,16 by means of stitching needle 22. The stitching spaces the tows of at least one of the layers 12,14,16 to provide a venting path.

The stitching comprises a polyester stitch thread of 155 dtex and it is applied in the form of a tricot stitch.

In use, this material is laid up in combination with the same or alternative moulding materials which may range from prepregs, fibrous reinforcement, core materials such as balsacore or honeycomb and the lay up is subsequently infused with a resin material and cured using well known conventional moulding and processing techniques. In this way a composite article is produced.

## Claims

1. A multi-axial fibrous reinforcement material comprising at least one first layer comprising uni-directional fibre tows in a substantially 0 degree direction and at least one further layer comprising uni-directional fibre tows in a direction in a range substantially deviating from 0 degrees and up to +/-90 degrees, wherein the material further comprises a means for securing the layers in relation to one another, the securing means forming a venting structure to provide gas venting in a direction across the respective layers.

2. The material of claim 1, wherein the further layer is in contact with the first layer.

3. The material of claim 1 or claim 2, wherein further layers are provided on opposite sides of the first layer.

4. The material of claim 3, wherein the material is a tri-axial fibrous reinforcement material.

5. The material of any of the preceding claims, wherein the securing means comprises cross layer stitching.

6. The material of claim 5, wherein the cross-layer stitching comprising a stich thread said thread having a weight in the range of from 10 to 300 dtex, more preferably from 30 to 270 dtex, even more preferably from 60 to 230 dtex, and even more preferably of from 80 to 200 dtex, and most preferably from 120 to 190 dtex or from 140 to 170 dtex or from 150 to 160 dtex and/or combinations of one or more of the aforesaid ranges.

7. The material of any of claims 5 or 6, wherein the stitch thread comprises a material selected from polyester, polyether sulfone, polyimide, polyamide, and/or combinations and/or copolymers of the aforesaid materials.

8. The material of any of claims 5 to 7, wherein the stitching is in the form of tricotstitching.

9. A moulding material comprising at least one fibrous reinforcement ply comprising the multi-axial reinforcement material as defined in any of claims 1 to 8, wherein the moulding material comprises a resin matrix, said resin matrix comprising a weight in the range of from 32 to 48% by weight in relation to the moulding material.

10. The moulding material of claim 9, wherein at least one fibrous reinforcement ply is unimpregnated.

11. The moulding material of claim 9, wherein at least one fibrous reinforcement ply is partially impregnated.

12. Use of a material as defined in any of claims 1 to 8 to improve the resin content of a cured composite part by reducing its void content to less than 4%, preferably less than 3%, and more preferably less than 2%.
